# EUROPEAN PATENT SPECIFICATION

(11) **EP 0 530 010 B1**
(45) Date of publication and mention of the grant of the patent: **20.05.1998**
(21) Application number: 92307771.3
(22) Date of filing: 26.08.1992
(51) Int. Cl.: H04M 1/274

(54) **Telephone with abbreviated dialling**
Telefon mit einer Kurzwahl-Funktion
Téléphone avec une fonction de numérotation abrégée

(30) Priority: 28.08.1991 FI 914048
(43) Date of publication of application: 03.03.1993
(73) Proprietor: NOKIA MOBILE PHONES LTD., 24101 Salo (FI)
(72) Inventor: Suominen, Timo, SF-24100 Salo (FI)
(74) Representative: Frain, Timothy John

(56) References cited:
- EP-A- 0 018 875
- DE-A- 3 819 538
- GB-A- 2 142 456
- US-A- 4 674 111
- US-A- 4 875 230

## Description

The present invention relates to a telephone having an abbreviated dialing facility and intended for use in a multinational mobile telephone network.

An advantage of the Nordic Mobile Telephone network over national mobile phone networks is the possibility to use the same telephone in any Nordic country. Almost all available mobile phones have an abbreviated dialling memory in order to facilitate the dialling of frequently used numbers. In national networks the abbreviated dialling was easy to implement; the desired number is stored into memory and it is read from memory into the display using an abbreviated dialling sequence. This is relatively straightforward, since the telephone can be used only in that country and in that network, for which the telephone was purchased.

The conventional method to use abbreviated dialling, where the number stored in the memory is read from the memory as such, will restrict the usage of abbreviated dialling in multinational networks. For example the Finnish number 90 123456 is entered into memory in this form, and it is returned in the same form, when it is read out from the memory. If the subscriber is travelling in Sweden and from there wants to place a call to the same number in Finland, he cannot use the same abbreviated dialling facility, because he now has to dial the number 009 358 0 123456. Therefore, for the same telephone number the user would have to program a different number for calls from each country located within the area of the network. This usage requires a large memory, and further the user has to remember into which abbreviated dialling memory location he has stored the numbers to reach the same subscriber from different countries. The problems associated with abbreviated dialling will have an even greater impact in networks covering larger numbers of countries, for example the Pan-European GSM network, to which more than 15 countries belong.

EP-B-0,075,120 discloses an automatic dialler for a conventional (land-line) telephone system, comprising a fixed portion connected to a telephone apparatus or to a telephone network. The fixed portion contains information identifying the local thelephone network to which it is connected. The automatic dialler also comprises a removable portion containing a memory for storing frequently called telephone numbers and for storing identity information corresponding to a home telephone network. The removable portion is portable and may be used with any fixed portion located in any country of the world. When the removable portion is inserted into the fixed portion the identity information of the two portions is compared. If they are the same, i.e. the removable portion is being used with a fixed portion connected to the home network, the telephone numbers stored in the removable portion are used without modification; but if they are different, i.e. the fixed portion is connected to a local or national network other than the home network, the local and/or international codes of the numbers stored in the removable portion are modified appropriately. It is noted that the telephone numbers are stored in full in the memory of the removable portion exactly as entered, and so in the case of an international number this includes the international access code, the country code, the area code, and the subscriber number. Moreover, EP-B-0,075,120 evidently is concerned with a conventional land-line telephone system and does not address the special problems of a common mobile telephone network extending over a group of countries, in which the same mobile telephone can be used without modification in any of the countries in the common network area.

DE-A1-3819538 discloses a telephone in accordance with the classifying portion of Claim 1.

EP-A1-18875 discloses an automatic telephone call generator characterised by the fact that it comprises means for storing in memory information indicating whether or not it is connected to the telephone network via an automatic switch, means for storing, where it is connected to the telephone network via an automatic switch, the special number to be transmitted with a view to directly accessing the network, means for selectively connecting the input of the said reading register either to the means for storing in memory the special number or to a predetermined memory register, and means for transmitting to the said circuit controlling the calling pulse transmitter the content of the said reading register.

According to the present invention there is provided a telephone for use in a common mobile telephone network extending over a group of countries, comprising an abbreviated dialling memory, means for entering and retrieving telephone numbers into and from said abbreviated dialling memory, characterised by the telephone being adapted to distinguish an international prefix U, a country code M, a trunk prefix K, and a subscriber number T of an entered telephone number, means for assigning an identifier C indicative of the destination country of the entered number, the entered number being stored in the abbreviated dialling memory in the modified form C+T for countries within the common network area, means for correlating the respective values of C, U, M and K for each country of said group, wherein in response to the retrieval of a subscriber number T from the abbreviated dialling memory appropriate numbers derived from the correlating means are prefixed to the subscriber number T dependant on the associated country indicator C relative to the country in which the telephone is registered at the time of use.

A telephone in accordance with the invention thus facilitates abbreviated international dialling from any of the countries in the common network area, i.e. any country in which the telephone is capable of operating. More specifically, the telephone numbers stored in the abbreviated dialling memory are modified automatically when they are retrieved from memory depending on which country the telephone is present in at that time.

Moreover, since the telephone is intended for use in a limited number of countries, i.e. the countries of the common network area, only a limited amount of correlation information is needed by the telephone.

Thus, preferably a country-specific identifier C₁....Cₙ is assigned to the telephone number for destinations within the common network area, where n is the number of countries in the common network area. A common unique identifier Cₓ is assigned to the telephone number for all destination countries outside the common network area. Hence it is not necessary for the telephone to store country codes or other information for countries outside the common network area. To this end a telephone number is stored in the form C+M+T for countries outside the common network area, and the country indicator C is replaced by the international prefix U when a number in the format C+M+T is retrieved from the abbreviated dialling memory.

Suitably, a further common unique identifier Cₛ may be assigned to the telephone number for all telephone numbers in a predetermined category, for example, telephone numbers relating to emergency services. To this end an entered telephone number is stored in the form C+T for the said category of numbers, and the country indicator C is simply omitted (rather than substituted) when a number in the format C+T is retrieved from the abbreviated dialling memory.

Embodiments of the invention will now be described, by way of example, with reference to the accompanying drawings, in which:-
Figure 1 is a flow chart showing how an entered telephone number is stored in an abbreviated dialling memory of a telephone in accordance with the invention,
Figure 2 is a flow chart showing how a telephone number is modified when it is retrieved from the abbreviated dialling memory, and
Figure 3 is a table illustrating the correlation of the parameters C, U, M, and T stored in the telephone.

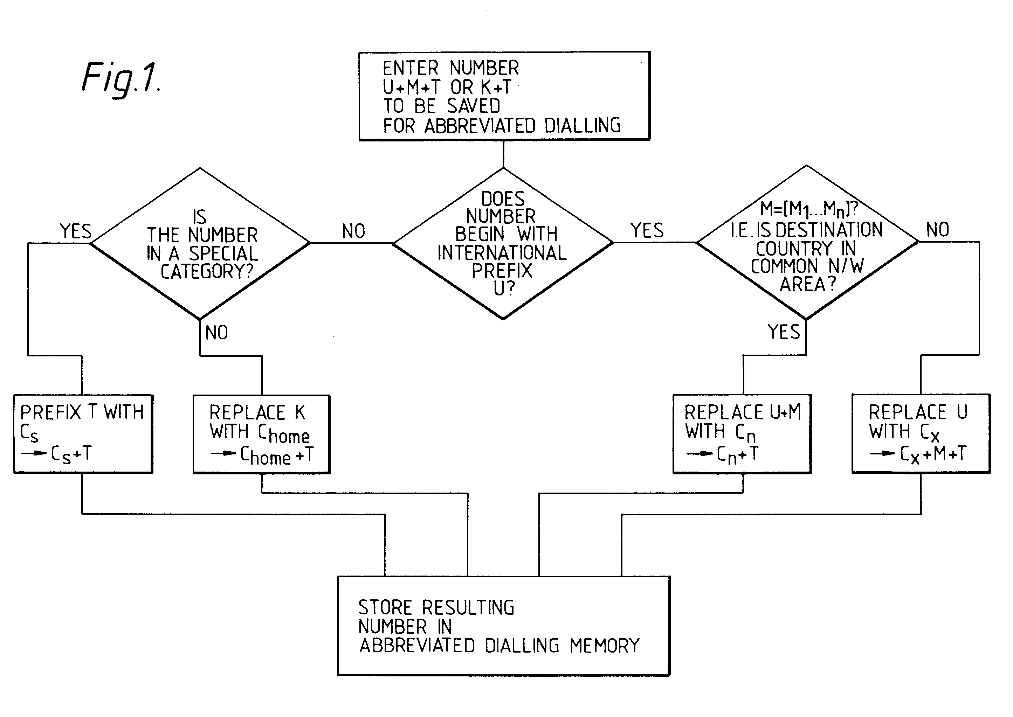

Referring to Figure 1, the user enters a telephone number to be stored in the abbreviated dialling memory using the keys on the telephone in conventional manner. As is usual, the number is entered in the form U+M+T for a call whose destination is abroad, and K+T for a national call, where the parameter U is the international prefix (990 from Finland), the parameter M is the country code of the destination country (Finland 358), the parameter K the number before the trunk code, or the trunk prefix which directs a call to the trunk level (9 in Finland), and the parameter T is the subscriber number including the trunk code (for a number 123456 in Helsinki T will have the value 0123456). On the basis of the entered numbers the telephone identifies the number either as a national or as an international call, and stores the number in the form C+T, when the number is identified as being placed nationally or to another country, which is in the common network area, e.g. the Nordic countries in the NMT network, and in the case of GSM those European countries joining the GSM network; and in the form C+M+T, when the number is identified as being placed to a country outside the common network area, as discussed in more detail below. The parameter C is an identifier which indicates the country to which a call is made within the area of the network, or whether it is placed to a country outside the network, or whether the number is a special number, e.g. an alarm number. On the basis of the identifier C the telephone will know into which country a call is directed, and when a call is made using abbreviated dialling, it is able to automatically select the correct numbers as the value of C, depending on the country into whose network the telephone is registered at the time of the call. In other words, the international prefixes U, the country codes M and the trunk prefixes K for countries within the common network area are already programmed into the telephone and stored in a look-up table with the corresponding country indicator C, as explained in more detail below. The telephone is able to distinguish the destination country from the subscriber number T, and on this basis it adds to the number the relevant identifier C indicating into which country the call is directed, if it is placed to a country within the network area, or indicating that the number is a special number, such as an alarm number.

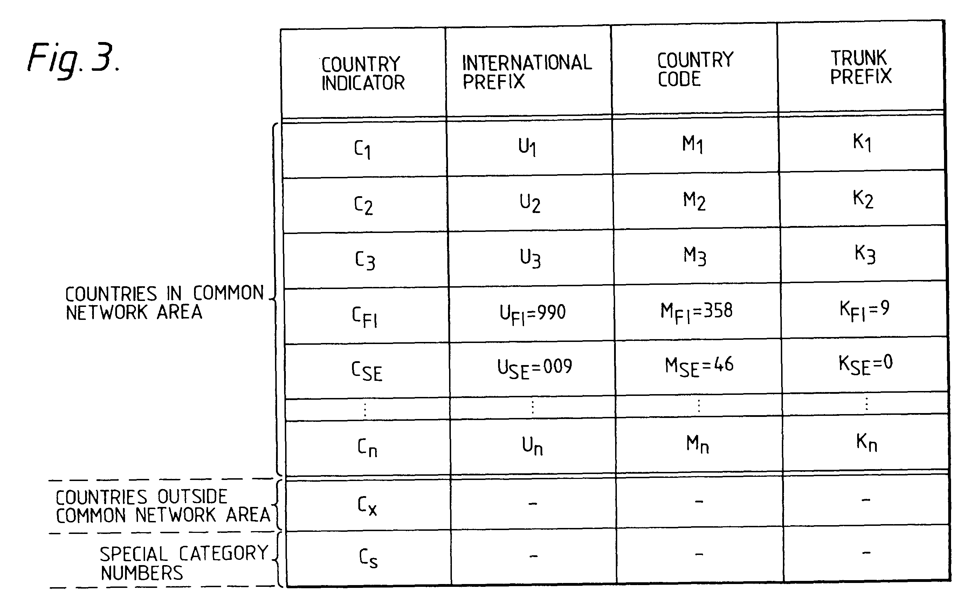

Referring to Figure 3, which illustrates how the various parameters C, U, M, and K may be stored and correlated in a look-up table in the telephone, a country-specific identifier C₁....Cₙ is assigned to an entered telephone number for destinations within the common network area, as determined by the country code U. On the other hand, a common unique identifier Cₓ is assigned to the entered telephone number for all destination countries outside the common network area, i.e. if the country code U is not found in the look-up table. Hence it is not necessary for the telephone to store country codes or other information for countries outside the common network area. For emergency numbers, or other special categories of number, a further common unique identifier Cₛ is assigned to the telephone number entered and the number is stored in the form C+T.

The country indicator C could be, for example, an easily recognised two (or more) letter abbreviation stored in ASCII format, representing the country name, e.g. FI for Finland, or DE for Germany (Deutschland). A two-letter code such as EX may be used to indicate a country outside the common network area. The two letter code may actually be displayed on the telephone display as a prefix to the subscriber number T whenever a number is retrieved from the abbreviated dialling memory. On the other hand, the full telephone number may be displayed, so that the user knows exactly what numbers are being dialled automatically. Alternatively, the country indicator may be a numeric code, e.g. 1=Finland, 2=Germany, etc; or any other suitable encoding scheme may be used.

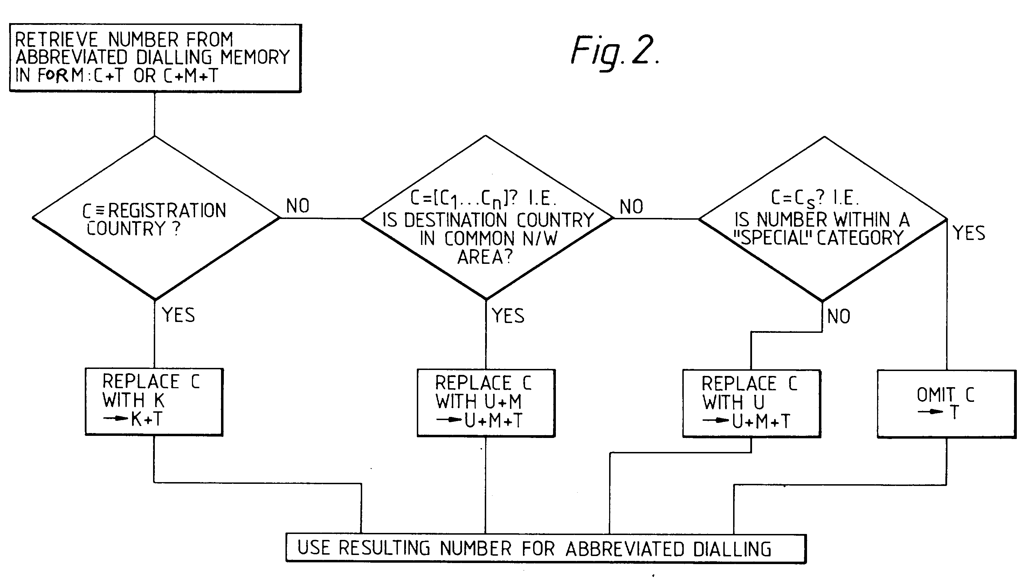

Referring now to Figure 2, when a telephone number is recalled from the abbreviated dialling memory via the interface of the keys on the telphone keypad, the telephone correspondingly first checks in which country it is registered at that time. If the identifier C of the telephone number retrieved from the abbreviated dialling memory corresponds with the country in which the telephone is currently registered, then the trunk prefix K for the country in question, which is obtained from the look-up table, is placed before the subscriber number T in place of the country indicator C. The number is thus modified to K+T. On the other hand, if the identifier C does not correspond to the country in which the telephone is currently present (registered), the number may be displayed in the form C+T, and if the destination country is within the common network area, i.e. C={C₁,....Cₙ}, then the appropriate international prefix U and the country code M, the values of which are obtained from the look-up table on the basis of the respective country indicator C, are substituted for C so that the number is modified to U+M+T. If the country is outside the common network area, and the number does not belong to a special category, e.g. for emergency services, the number is displayed in the form C+M+T where the country code M is obtained from the look-up table and C is automatically replaced by the international prefix U according to the country within the network area from which the call is made. If the number does belong to a predetermined special category of numbers, i.e. C=Cₛ, then C is simply omitted (rather than substituted) when a number in the format Cₛ+T is retrieved, and the number is returned in the form T.

Some examples of storing and retrieving telephone numbers in accordance with the present invention will now be given.

As a first example, when the number 90 123456 is entered in Finland the telephone detects that the number is a national number with the trunk code 0, and thus the value C_{FI}0123456 is stored into memory, where the value C_{FI} is the country indicator for Finland. When the number later is recalled with abbreviated dialling from the same memory location, the telephone will first check the identifier C and notice that the telephone number is a Finnish one. Then, if the telephone is registered on the Finnish network at that time, the number is modified to 90123456, since K_{FI}=9; or, if the telephone is registered on the Swedish network, for example, then the telephone is able to select from the look-up table the international prefix U_{SE}=009 for Sweden and the country code M_{FI}=358 for Finland, whereby the number is modified to 009 358 0 123456. Alternatively, in Norway the number would be modified to 095 358 0 123456, since U_{NO}=095 and M_{FI}=358.

As a second example, when the number 990 46 8 123456 is entered, the telephone will similarly detect from the look-up table that the call is placed abroad from Finland, and to a country within the common network area, i.e. Sweden (e.g. in the NMT network). Then the number C_{SE}8123456 is stored into the concerned memory location, where C_{SE} is the identifier for Sweden. In accordance with the invention, the number is modified to 990 46 8 123456 when calling from Finland, and 08 123456 when calling from Sweden.

As a third example it is assumed that the number 990 49 234 123456 is entered into a memory location. The telephone will detect the international prefix 990 and conclude that it is an international number, but since the country code 49 is not stored in the look-up table, this tells the telephone that the number in question is not directed to a country belonging to the common network area (e.g. the NMT network). In this case e.g. the number Cₓ49234123456 is stored into memory, where Cₓ relates to a number outside the common network area, and when this memory location is read for example in Sweden, the number is modified to 009 49 234 1234356, since U_{SE}=009.

The telephone is further able to distinguish special numbers. Let the number 000 be entered in Finland. Since the number is not an international number and since it does not begin with 9, the code Cₛ000 is written in the memory, where Cₛ refers to a special category of number. If this number is called from memory in any country within the network area, the number 000 is used without any prefix.

It will be evident in view of the foregoing description that a telephone in accordance with the invention facilitates abbreviated international dialling in a multinational mobile phone network. Once the number is stored in the abbreviated dialling memory it can be recalled and used in the same way when the telphone is present in any country within the common network area. This enhances user friendliness in multinational mobile phone networks, as in NMT and GSM. It also economizes on the telephone's abbreviated dialling memory, since it is not necessary to store the international prefix U nor the country code M in this memory for countries within the network area, because these codes are already stored in a memory (the look-up table) common to all abbreviated dialling calls, and from which memory the codes are automatically read according to the identifier C stored in the abbreviated dialling memory. When a call is destined for a country outside the common network area it is not necessary to enter the international prefix U into the memory, but only the country code M and the subscriber number T. Moreover, it is not necessary for the telephone to store in the look-up table country codes or other information for countries outside the common network area, which further economizes on memory requirements.

## Claims

1. A telephone for use in a common mobile telephone network extending over a group of countries, comprising
an abbreviated dialling memory,
means for entering and retrieving telephone numbers into and from said abbreviated dialling memory,
characterised by the telephone being adapted to distinguish an international prefix U, a country code M, a trunk prefix K, and a subscriber number T of an entered telephone number,
means for assigning an identifier C indicative of the destination country of the entered number, the entered number being stored in the abbreviated dialling memory in the modified form C+T for countries within the common network area,
means for correlating the respective values of C, U, M, and K for each country of said group,
wherein in response to the retrieval of a subscriber number T from the abbreviated dialling memory appropriate numbers derived from the correlating means are prefixed to the subscriber number T dependant on the associated country indicator C relative to the country in which the telephone is registered at the time of use.

2. A telephone as claimed in Claim 1, wherein the appropriate numbers prefixed to the subscriber number T are
(i) K in the case of a domestic all, or
(ii) U+M in the case of an international call to a country within the common network area.

3. A telephone as claimed in claim 1 or claim 2, wherein the entered number is stored in the form C+M+T for countries outside said common network area.

4. A telephone as claimed in claim 3, wherein the country indicator C is replaced by the international prefix U when a number in the format C+M+T is retrieved from the abbreviated dialling memory.

5. A telephone as claimed in any of the preceding claims, wherein the telephone number is stored in the form C+T for a predetermined category of telephone numbers.

6. A telephone as claimed in claim 5, wherein no prefix is added to the subscriber number T and the country indicator C is omitted when a number in the format C+T is retrieved from the abbreviated dialling memory.

7. A telephone as claimed in claim 5 or claim 6, wherein the predetermined category of telephone numbers relates to emergency services.

8. A telephone as claimed in any of the preceding claims, wherein a country-specific identifier C₁....Cₙ is assigned to the telephone number for destinations within the common network area.

9. A telephone as claimed in claim 8, wherein a common unique identifier Cₓ is assigned to the telephone number for all destination countries outside the common network area.

10. A telephone as claimed in claim 8 or claim 9, wherein a further common unique identifier Cₛ is assigned to the telephone number for all telephone numbers in a predetermined category.

## Patentansprüche

1. Telefon für ein sich über eine Gruppe von Ländern erstreckendes gemeinsames Mobiltelefonnetzwerk, mit
einem Kurzwahlspeicher und Mitteln zum Eingeben und Zurückladen von Telefonnummern in/aus dem Kurzwahlspeicher, **gekennzeichnet durch** die Fähigkeit eine internationale Vorwahl U, eine Landesvorwahl M, eine Ortskennzahl K und eine Teilnehmernummer T einer eingegebenen Telefonnummer zu unterscheiden;
Mittel zur Zuweisung eines Indikators C, der das Zielland der eingegebenen Nummer anzeigt, wobei die eingegebene Nummer in dem Kurzwahlspeicher in modifizierter Form C+T für die Länder innerhalb des gemeinsamen Netzwerkgebiets gespeichert wird, und
Mittel zur Korrelation der jeweiligen Werte von C, U, M und K für jedes Land der Gruppe, wobei in Antwort auf eine aus dem Kurzwahlspelcher zurückgeladene Teilnehmernummer T geeignete von den Korrelationsmitteln abgeleitete Nummern der Teilnehmernummer T vorangestellt werden, und zwar in Abhängigkeit von dem zugewiesenen Landesindikator C und relativ zu dem Land, in dem das Telefon zum Zeitpunkt der Verwendung registriert ist.

2. Telefon nach Anspruch 1, bei dem im Falle eines Inlandanrufs derTeilnehmernummer T die entsprechenden Nummern K,oder im Falle eines internationalen Anrufs in ein Land innerhalb des gemeinsamen Netzwerkgebiets die Nummern U+M vorangestellt werden.

3. Telefon nach Anspruch 1 oder 2, bei dem die eingegebene Nummer in der Form C+M+T für Länder außerhalb des gemeinsamen Netzwerkgebiets gespeichert wird.

4. Telefon nach Anspruch 3, bei dem der Landesindikator C durch die internationale Vorwahl U ersetzt wird, falls eine Nummer der Form C+M+T aus dem Kurzwahlspeicher zurückgeladen wird.

5. Telefon nach irgendeinem der vorangegangenen Ansprüche, bei dem die Telefonnummer für eine vorbestimmte Klasse von Telefonnummern in der Form C+T gespeichert wird.

6. Telefon nach Anspruch 5, bei dem der Teilnehmernummer T keine Vorwahl vorangestellt wird, und der Landesindikator C weggelassen wird falls eine Nummer der Form C+T aus dem Kurzwahlspeicher zurückgeladen wird.

7. Telefon nach Anspruch 5 oder 6, bei dem die vorbestimmte Klasse von Telefonnummern Notfalldienste betrifft.

8. Telefon nach irgendeinem der vorangegangenen Ansprüche, bei dem für Ziele innerhalb des gemeinsamen Netzwerkgebiets der Telefonnummer ein landesspezifischer Indikator C₁...Cₙ zugewiesen wird.

9. Telefon nach Anspruch 8, bei dem der Telefonnummer für alle Zielländer außerhalb des gemeinsamen Netzwerkgebiets ein gemeinsamer einmaliger Indikator Cₓ zugewiesen wird.

10. Telefon nach Anspruch 8 oder 9, bei dem der Telefonnummer für alle Telefonnummern einer vorbestimmten Klasse ein weiterer gemeinsamer einmaliger Indikator Cₛ zugewiesen wird.

## Revendications

1. Téléphone destiné à être utilisé dans un réseau pour téléphones mobiles commun à un groupe de pays, comprenant :
une mémoire pour les numérotations abrégées;
un moyen pour entrer les numéros de téléphone dans ladite mémoire pour les numérotations abrégées et les extraire de cette mémoire;
ce téléphone étant caractérisé par le fait qu'il est conçu pour distinguer le préfixe international U, le code de pays M, le préfixe K de l'interurbain et le numéro T de l'abonné dans un numéro de téléphone entré;
un moyen pour attribuer un identificateur C indiquant le pays destinataire du numéro entré, le numéro entré étant enregistré dans la mémoire pour les numérotations abrégées sous la forme modifiée C + T pour les pays couverts par le réseau commun;
un moyen pour assurer la corrélation entre les valeurs respectives de C, U, M et K pour chaque pays dudit groupe;
dans lequel, en réponse à l'extraction du numéro T de l'abonné de la mémoire pour les numérotations abrégées, les numéros appropriés obtenus par le moyen de corrélation sont adjoints en préfixe au numéro T de l'abonné en fonction de l'indicatif C du pays concerné, qui doit être composé dans le pays dans lequel le téléphone est enregistré au moment de l'utilisation

2. Téléphone selon la revendication 1, dans lequel les numéros appropriés adjoints en préfixes au numéro T de l'abonné sont (i) K dans le cas d'un appel domestique ou (ii) U + M dans le cas d'un appel international vers un pays couvert par le réseau commun.

3. Téléphone selon la revendication 1 ou la revendication 2, dans lequel le numéro entré est enregistré sous la forme C + M + T pour les pays en dehors de ceux couverts par ledit réseau commun.

4. Téléphone selon la revendication 3, dans lequel l'indicatif C du pays est remplacé par le préfixe international U quand un numéro dans le format C + M + T est extrait de la mémoire pour les numérotations abrégées.

5. Téléphone selon une quelconque des revendications précédentes, dans lequel le numéro de téléphone est enregistré sous la forme C + T pour une catégorie prédéterminée de numéros de téléphone.

6. Téléphone selon la revendication 5, dans lequel aucun préfixe n'est adjoint au numéro T de l'abonné et dans lequel l'indicatif C du pays est omis quand un numéro ayant le format C + T est extrait de la mémoire pour les numérotations abrégées.

7. Téléphone selon la revendication 5 ou la revendication 6, dans lequel la catégorie prédéterminée de numéros de téléphone concerne les services d'urgence.

8. Téléphone selon une quelconque des revendications précédentes, dans lequel l'identificateur spécifique du pays C₁ ... Cₙ est attribué aux numéros de téléphone des destinations à l'intérieur de la zone couverte par le réseau commun.

9. Téléphone selon la revendication 8, dans lequel un identificateur commun Cₓ est attribué aux numéros de téléphone de tous les pays destinataires en dehors de la zone couverte par le réseau commun.

10. Téléphone selon la revendication 8 ou la revendication 9, dans lequel un autre identificateur unique commun Cₛ est attribué à tous les numéros de téléphone d'une catégorie prédéterminée.
